# EUROPEAN PATENT SPECIFICATION

(11) **EP 3 604 138 B1**
(45) Date of publication and mention of the grant of the patent: **03.08.2022**
(21) Application number: 17902039.1
(22) Date of filing: 24.11.2017
(51) Int. Cl.: B64D 37/08, B64D 37/06, B64D 37/20

(54) **NEGATIVE PRESSURE LOW DEAD OIL ANTI-BUBBLE AEROPLANE FUEL TANK APPARATUS**
UNTERDRUCKFLUGZEUGTREIBSTOFFTANKVORRICHTUNG MIT BLASENSCHUTZ
APPAREIL DE RÉSERVOIR DE CARBURANT D'AVION ANTI-BULLES D'HUILE MORTE À BASSE PRESSION NÉGATIVE

(30) Priority: 23.03.2017 CN 201710179389
(43) Date of publication of application: 05.02.2020
(73) Proprietor: Beijing Aeronautical Science & Technology Research Institute,Commercial Aircraft Corporation of China, Beijing 102211 (CN); Commercial Aircraft Corporation Of China, Ltd., Shanghai 200126 (CN)
(72) Inventor: ZHANG, Chi, Beijing 102211 (CN); LI, Jiang, Beijing 102211 (CN)
(74) Representative: Gille Hrabal Partnerschaftsgesellschaft mbB Patentanwälte
(86) International application number: PCT/CN2017/112887
(87) International publication number: WO 2018/171239

(56) References cited:
- EP-A1- 2 572 919
- CN-A- 106 945 842
- CN-U- 201 872 954
- CN-U- 202 152 111
- CN-U- 206 031 801
- CN-U- 206 031 801
- GB-A- 1 001 969
- GB-A- 1 001 969
- GB-A- 2 059 372
- US-A- 2 703 607
- US-A- 3 903 924
- US-A1- 2014 137 979

## Description

### Field of the Invention

The invention mainly belongs to the technical field of fuel tank design and relates to a negative pressure type low-dead-fuel anti-bubble aircraft fuel tank device, particularly to a device that utilizes the negative pressure in a cavity to suck the fuel outside the cavity to flow into the cavity.

### Background of the Invention

Dead fuel exists inevitably in an aircraft fuel tank, and the weight of the system is increased owing to the existence of the dead fuel. Therefore, the dead fuel capacity in the fuel tank shall be reduced as far as possible in the design of an aircraft fuel system, so as to increase the weight of effective fuel and increase the aircraft range. In addition, the fuel supplied to the engine shall not contain any bubble, in order to ensure the operation safety of the aircraft engine. In the design of modern aircraft fuel systems, the dead fuel capacity is often reduced by means of an ejector vacuum pump or the like to prevent the generation of bubbles, or a soft fuel tank may be used to attain the purpose of reducing dead fuel and preventing bubbles.

The ejector vacuum pump scheme in the above-mentioned technical schemes is usually used in large-size aircrafts, such as commercial aircrafts, in view of the high complexity, high technical difficulties, and high additional weight. The soft fuel tank scheme in the above-mentioned technical schemes is often used in light-weight aircrafts and unmanned aerial vehicles. However, soft fuel tanks have poor safety owing to some disadvantages, such as low structural strength. Besides, soft fuel tanks have poor designability, and it is difficult to carry out optimization design of soft fuel tanks according to specific requirements of the aircrafts.

GB 2 059 372 A describes an aircraft engine oil tank for negative G operation. The tank is divided into three series-connected chambers. When the tank is inverted, a reservoir of oil is still provided to supply oil to an oil outlet. CN 206 031 801 U discloses a fuel tank for an unmanned aerial vehicle with a bottom having a V-shape. The fuel tank is separated into a front part and a rear part by a dividing wall arranged at the bottom of the "V".

### Content of the Invention

In view of the above problems, the present invention provides a negative pressure type low-dead-fuel anti-bubble aircraft fuel tank device, which utilizes the pressure difference between different spaces in the fuel tank to suck the fuel to flow towards a low pressure area, and utilizes a bevel surface inside the aircraft fuel tank device to make the fuel flow towards the lower side automatically under the gravity action. The aircraft fuel tank device has a simple structure, is easy to produce and manufacture, doesn't require any additional equipment, doesn't introduce any additional weight, has high safety and high designability, etc.

If pressure difference between two liquid containers that communicate with each other, the liquid will flow from the container with higher pressure to the container with lower pressure. Utilizing that principle, in the present invention, the internal space of a fuel tank is divided into several spaces that communicate with each other, and a pressure difference is maintained among those spaces, so that the fuel can flow persistently among the spaces. In addition, in the present invention, a bevel surface is arranged at the bottom of the aircraft fuel tank device, so that the fuel can flow from the higher end of the bevel surface to the lower end of the bevel surface automatically under the gravity action.

The object of the present invention is attained with the attached claim 1.

Furthermore, in the case of one wave-resistant baffle, the spaces that communicate with each other comprise one high pressure space and one low pressure fuel supply space;
In the case of two or more wave-resistant baffles, the spaces that communicate with each other comprise one high pressure space, at least one pressure transition space, and one low pressure fuel supply space;
A fuel inlet end of the fuel suction hose is placed inside the low pressure fuel supply space, a fuel outlet end of the fuel suction hose is connected to the fuel outlet of the aircraft fuel tank device, and the fuel outlet is arranged on the shell of the high pressure space; the aircraft fuel tank device supplies fuel to the engine via the fuel outlet.

Furthermore, a bevel surface is arranged at the bottom of the aircraft fuel tank device to reduce the weight of dead fuel, the distance from the bevel surface to the bottom of the aircraft fuel tank device increases gradually in the direction from the low pressure fuel supply space to the high pressure space, and the slope of the bevel surface can be set according to the pitch angle of the aircraft.

Furthermore, every two adjacent spaces communicate with each other through a communication pipe arranged on the fuel tank shell, and a valve is provided on each communication pipe; the valve is configured to control the connection state of the communication pipe, the valve is controlled to open when fuel is filled into the aircraft fuel tank device, and the valve is controlled to close after the fuel filling is finished.

Furthermore, the wave-resistant baffle comprises a first side, a second side, a third side arranged opposite to the first side, and a fourth side arranged opposite to the second side.

Furthermore, the first side is sealingly connected to the top shell of the fuel tank shell; the second side and the fourth side are sealingly connected to the two opposite sides of the fuel tank shell respectively; the communication port is arranged on the third side, the rest portion of the third side is sealingly connected to the bevel surface at the bottom of the fuel tank shell except for the portion corresponding to the communication port.

Furthermore, a circular hole is arranged on the wave-resistant baffle for the fuel suction hose to extend from the low pressure fuel supply space to the high pressure space.

Beneficial effects of the present invention:
The negative pressure type low-dead-fuel anti-bubble fuel tank provided in the present invention utilizes a bevel surface at the bottom of the fuel tank and a pressure difference between adjacent spaces inside the fuel tank to attain the purpose of reducing low dead fuel and preventing bubbles.

The aircraft fuel tank device provided in the present invention has a simple structure, is cheap, can reduce the weight of dead fuel and prevent generation of bubbles in the fuel tank, and is applicable to light-weight aircrafts and unmanned aerial vehicles.

The aircraft fuel tank device provided in the present invention is easy to produce and manufacture, doesn't require any additional equipment, doesn't introduce any additional weight, has high safety and high designability, etc.

### Brief Description of Drawings

Fig. 1 is a front view of the structure of the aircraft fuel tank device in embodiment 1;
Fig. 2 is a side view of the structure of the aircraft fuel tank device in embodiment 1;
Fig. 3 is a top view of the structure of the aircraft fuel tank device in embodiment 1;
Fig. 4 is a schematic diagram of the wave-resistant baffle 4.

### Detailed Description of the Embodiments

Hereunder the present invention will be further detailed in embodiments with reference to the accompanying drawings, to make the object, technical scheme, and advantages of the present invention understood more clearly. It should be understood that the embodiments described here are only provided to explain the present invention, but shall not be deemed as constituting any limitation to the present invention.

Rather, the present invention is intended to encompass any alternation falling within the scope of the present invention as defined by the claims. Furthermore, some specific details are described in at large in the following detailed description of the present invention, to enable the public to understand the present invention better. However, those skilled in the art can fully understand the present invention even without the description of those details.

### Embodiment 1

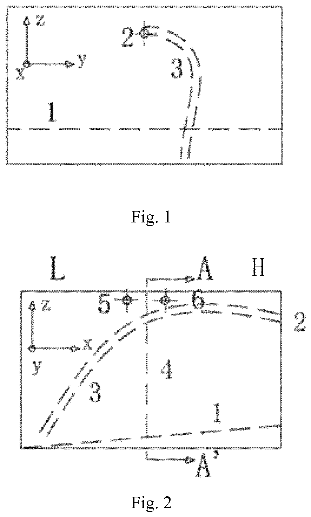

A negative pressure type low-dead-fuel anti-bubble aircraft fuel tank device (abbreviated as a fuel tank), as shown in Figs. 1-4, comprising a fuel tank shell, a fuel suction hose 3 arranged inside the fuel tank shell, and a fuel filler 9 and a fuel outlet 2 that are arranged on the fuel tank shell, wherein, the negative pressure type low-dead-fuel anti-bubble aircraft fuel tank device further comprises a wave-resistant baffle 4;
in this embodiment, the wave-resistant baffle 4 consists of one wave-resistant baffle; the wave-resistant baffle divides the internal space of the aircraft fuel tank device into two spaces that communicate with each other, including a high pressure space (i.e., the space on the right of AA' in Fig. 2, denoted by a letter H) and a low pressure fuel supply space (i.e., the space on the left of AA' in Fig. 2, denoted by a letter L); the high pressure space H and the low pressure fuel supply space L communicates with each other through a communication port 8 arranged in the bottom of the wave-resistant baffle 4; the aircraft fuel tank device utilizes the pressure difference between the two adjacent spaces to suck the fuel in the high pressure space into the low pressure fuel supply space, so as to avoid bubbles in the fuel supplied to the engine.

A fuel inlet end of the fuel suction hose 3 is placed inside the low pressure fuel supply space L, a fuel outlet end of the fuel suction hose 3 is connected to the fuel outlet 2, and the fuel outlet 2 is arranged on the shell of the high pressure space H; the aircraft fuel tank device supplies fuel to the engine via the fuel outlet 2.

A bevel surface 1 is arranged at the bottom of the aircraft fuel tank device to reduce the weight of dead fuel, the distance from the bevel surface 1 to the bottom of the aircraft fuel tank device increases gradually in the direction from the low pressure fuel supply space L to the high pressure space H, and the slope of the bevel surface 1 can be set according to the pitch angle of the aircraft, so that the included angle between the bevel surface 1 and the horizontal plane is greater than 0 degree when the aircraft flies with the nose lower than the tail.

A first circular hole 5 and a second circular hole 6 are arranged respectively in the upper part of the corresponding side wall of the fuel tank shell from the low pressure fuel supply space L to the high pressure space H, the first circular hole 5 and the second circular hole 6 communicate with each other through a communication pipe arranged on the fuel tank shell, and a valve is arranged on the communication pipe; the valve is configured to control the connection state of the communication pipe, the valve is controlled to open when fuel is filled into the aircraft fuel tank device, and the valve is controlled to close after the fuel filling is finished.

The wave-resistant baffle comprises a first side, a second side, a third side opposite to the first side, and a fourth side opposite to the second side.

The first side is sealingly connected to the top shell of the fuel tank shell; the second side and the fourth side are sealingly connected to the two opposite sides of the fuel tank shell respectively; a communication port 8 is arranged on the fourth side, and, except the portion corresponding to the communication port 8, the rest portion of the fourth side is sealingly connected to the bevel surface at the bottom of the fuel tank shell.

A circular hole is arranged in the wave-resistant baffle for the fuel suction hose to extend from the low pressure fuel supply space L to the high pressure space H.

A coordinate system is shown in Figs. 1-4 respectively, wherein the positive direction of the coordinate axis x is in line with the nose direction of the aircraft.
Fig. 1 is a front view of the fuel tank. As shown in Fig. 1, the dotted line 1 represents an intersecting line between the bevel surface 1 arranged at the bottom of the fuel tank and the front side of the fuel tank, the fuel outlet 2 is arranged on the front side of the fuel tank, and the fuel suction hose 3 inside the fuel tank is connected to the fuel outlet 2.
Fig. 2 is a side view of the fuel tank. As shown in Fig. 2, the inclined dotted line 1 represents the bevel surface inside the fuel tank, and the dotted line 4 represents the wave-resistant baffle, which divides the space in the fuel tank into a space on the left of AA' and a space on the right of AA', and inhibits fuel sway in the fuel tank. The first circular hole 5 and the second circular hole 6 make the two parts separated by the wave-resistant baffle communicate with each other through the communication pipe, a valve is mounted between the first circular hole 5 and the second circular hole 6 to control the connection state. The valve is opened so that the first circular hole 5 and the second circular hole 6 communicate with each other when fuel is filled, and the valve is closed after the fuel filling is finished.

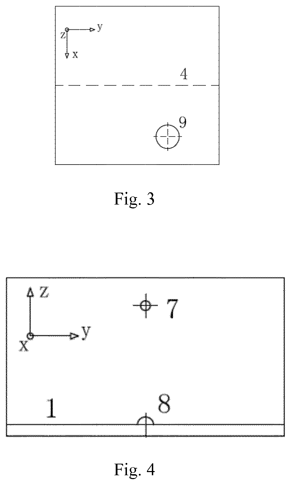

Fig. 3 is a top view of the fuel tank. As shown in Fig. 3, the fuel filler 9 for filling fuel into the fuel tank is also used as a vent hole for the fuel tank, the dotted line 4 represents the wave-resistant baffle that divides the space in the fuel tank, and a tank cap is arranged on the fuel filler 9, and may be a tank cap for ordinary fuel tanks.
Fig. 4 is a schematic diagram of the wave-resistant baffle 4, wherein the solid circle indicated by reference number 7 is a circular hole through which the fuel suction hose 3 passes. The fuel suction hose 3 shall be fitted with the wave-resistant baffle 4 in a leak-tight state. A communication port 8 for the fuel to flow is arranged in the bottom of the wave-resistant baffle 4, and the solid line 1 represents an intersecting line between the wave-resistant baffle 4 and the bevel surface inside the fuel tank. The wave-resistant baffle 4 shall be fitted with the bevel surface 1 in a leak-tight state, except the communication port 8.

To fill fuel into the aircraft fuel tank device in this embodiment, the valve is opened, fuel is filled through the fuel filler into the high pressure space, the fuel enters into the low pressure fuel supply space through the communication port in the wave-resistant baffle, the air in the low pressure fuel supply space is expelled via the valve into the high pressure space and then is exhausted out via the fuel filler from the fuel tank; all valves are closed after all of the spaces are fully filled with fuel; now, the low pressure fuel supply space is fully filled with the fuel and has no bubble, and there is no bubble in the fuel supplied to the engine since there is no bubble in the low pressure fuel supply space L; after the fuel is filled, the two spaces communicate with each other only through the communication port in the wave-resistant baffle.

After the fuel filling is finished, the low pressure fuel supply space L is fully filled with fuel in most of the time, and there is no bubble in the fuel supplied to the engine, while the space of fuel extracted from the space H is filled with air, so that the pressure is balanced. Besides, since the low pressure fuel supply space is fully filled with fuel in most of the time, the aircraft can fly at large pitch angle and rolling angle. Thus, the weight of dead fuel is reduced effectively, and the fuel utilization is improved.

When the engine takes the fuel in the aircraft fuel tank device during the flight of the aircraft, it sucks the fuel in the low pressure fuel supply space first; thus, the pressure in the low pressure fuel supply space is decreased, the fuel in the high pressure space is automatically sucked into the low pressure fuel supply space via the communication port in the wave-resistant baffle, so that the pressure is balanced between the low pressure fuel supply space and the high pressure space.

Owing to the existence of the bevel surface inside the fuel tank, the fuel tends to flow to the low pressure fuel supply space L automatically under the gravity action. Thus, the fuel in the high pressure space R can be fully consumed, and thereby the weight of dead fuel is reduced.

### Embodiment 2

The purpose of the wave-resistant baffle is to prevent vehement sway of the fuel in the movement process. The spacing between the wave-resistant baffles preferably is 15-25cm. Therefore, according to the actual requirement, a plurality of wave-resistant baffles may be provided to divide the internal space of the fuel tank into several separate spaces if the fuel tank is large. For example, in this embodiment, in view that the length of the fuel tank in the X-direction is 60cm, preferably two wave-resistant baffles are provided to divide the fuel tank evenly into three parts in the X-direction. While some preferred embodiments of the present invention are described above, the features of the present invention are not limited to those embodiments. The present invention as defined by the attached claims.

## Claims

1. A negative pressure type low-dead-fuel anti-bubble aircraft fuel tank device, comprising a fuel tank shell, a fuel suction hose (3) arranged inside the fuel tank shell, and a fuel filler (9) and a fuel outlet (2) that are arranged on the fuel tank shell, wherein, the negative pressure type low-dead-fuel anti-bubble aircraft fuel tank device further comprises a wave-resistant baffle (4); there are at least one wave-resistant baffles (4) in the device; the wave-resistant baffle (4) divides the internal space of the aircraft fuel tank device into at least two spaces (L, H); every two adjacent spaces communicate with each other through a communication port (8) at the bottom of the corresponding wave-resistant baffle (4); the aircraft fuel tank device utilizes the pressure difference between the adjacent spaces (L, H) to suck the fuel to flow into a low pressure fuel supply space (L), so as to avoid bubbles in the fuel supplied to the engine,
wherein a bevel surface (1) is arranged at the bottom of the aircraft fuel tank device including all the internal spaces (L, H) resulting from the division by the at least one wave-resistant baffle (4) to reduce the weight of dead fuel, the distance from the bevel surface (1) to the bottom of the aircraft fuel tank device increases gradually in the direction from the low pressure fuel supply space (L) to the high pressure space (H),
wherein the wave-resistant baffle (4) comprises a first side, a second side, a third side arranged opposite to the first side, and a fourth side arranged opposite to the second side, wherein the first side is sealingly connected to the top shell of the fuel tank shell; the second side and the fourth side are sealingly connected to the two opposite sides of the fuel tank shell respectively; the communication port (8) is arranged on the third side, the rest portion of the third side is sealingly connected to the bevel surface (1) at the bottom of the fuel tank shell except for the portion corresponding to the communication port (8).

2. The negative pressure type low-dead-fuel anti-bubble aircraft fuel tank device according to claim 1, wherein, every two adjacent spaces (L, H) communicate with each other through a communication pipe arranged on the fuel tank shell, and a valve is provided on each communication pipe; the valve is configured to control the connection state of the communication pipe, the valve is controlled to open when fuel is filled into the aircraft fuel tank device, and the valve is controlled to close after the fuel filling is finished.

## Patentansprüche

1. Eine Unterdrucktyp-Niedertotraumtreibstoff-Antiblasen-Flugzeug-Kraftstofftank-Vorrichtung, umfassend eine Kraftstofftankhülle, einen innerhalb der Kraftstofftankhülle angeordneten Kraftstoffsaugschlauch (3) und einen Tankstutzen (9) und einen Kraftstoffauslass (2), die an der Kraftstofftankhülle angeordnet sind, wobei die Unterdrucktyp-Niedertotraumtreibstoff-Antiblasen-Flugzeug-Kraftstofftank-Vorrichtung ferner eine wellenbeständige Trennwand (4) umfasst, mindestens eine wellenbeständige Trennwände (4) in der Vorrichtung vorhanden ist; die wellenbeständige Trennwand (4) den Innenraum der Flugzeug-Kraftstofftank-Vorrichtung in mindestens zwei Räume (L, H) unterteilt; jeweils zwei benachbarte Räume miteinander durch eine Verbindungsöffnung (8) am Boden der entsprechenden wellenbeständigen Trennwand (4) in Verbindung stehen; die Flugzeug-Kraftstofftank-Vorrichtung den Druckunterschied zwischen den benachbarten Räumen (L, H) nutzt, um den Kraftstoff anzusaugen, damit er in einen Niederdruck-Kraftstoffversorgungsraum (L) fließt, um so Blasen in dem dem Triebwerk zugeführten Kraftstoff zu vermeiden,
wobei eine abgeschrägte Fläche (1) am Boden der Flugzeug-Kraftstofftank-Vorrichtung angeordnet ist, die alle inneren Räume (L, H) enthält, die sich aus der Unterteilung durch die mindestens eine wellenbeständige Trennwand (4) ergeben, um das Gewicht des toten Kraftstoffs zu verringern, wobei der Abstand von der abgeschrägten Fläche (1) zum Boden der Flugzeug-Kraftstofftank-Vorrichtung allmählich in der Richtung von dem Niederdruck-Kraftstoffversorgungsraum (L) zu dem Hochdruckraum (H) zunimmt,
wobei die wellenbeständige Trennwand (4) eine erste Seite, eine zweite Seite, eine der ersten Seite gegenüberliegend angeordnete dritte Seite und eine der zweiten Seite gegenüberliegend angeordnete vierte Seite umfasst, wobei die erste Seite abdichtend mit der oberen Schale der Kraftstofftankhülle verbunden ist; die zweite Seite und die vierte Seite jeweils abdichtend mit den beiden gegenüberliegenden Seiten der Kraftstofftankhülle verbunden sind; die Verbindungsöffnung (8) an der dritten Seite angeordnet ist, wobei der restliche Abschnitt der dritten Seite, mit Ausnahme des Abschnitts, der der Verbindungsöffnung (8) entspricht, abdichtend mit der abgeschrägten Oberfläche (1) am Boden der Kraftstofftankhülle verbunden ist.

2. Die Unterdrucktyp-Niedertotraumtreibstoff-Antiblasen-Flugzeug-Kraftstofftank-Vorrichtung gemäß Anspruch 1, wobei jeweils zwei benachbarte Räume (L, H) miteinander durch ein Verbindungsrohr in Verbindung stehen, das an der Kraftstofftankhülle angeordnet ist, und ein Ventil an jedem Verbindungsrohr vorgesehen ist; das Ventil dazu eingerichtet ist, den Verbindungszustand des Verbindungsrohrs zu steuern, das Ventil so gesteuert ist, dass es öffnet, wenn Kraftstoff in die Flugzeug-Kraftstofftank-Vorrichtung eingefüllt wird, und das Ventil so gesteuert ist, dass es schließt, nachdem die Kraftstoffbefüllung beendet ist.

## Revendications

1. Dispositif de réservoir de carburant d'avion anti-bulle à faible teneur en carburant mort du type à pression négative, comprenant une coque de réservoir de carburant, un tuyau d'aspiration de carburant (3) arrangé à l'intérieur de la coque de réservoir de carburant, et un remplisseur de carburant (9) et une sortie de carburant (2) qui sont arrangés sur la coque de réservoir de carburant, dans lequel, le dispositif de réservoir d'avion anti-bulle à faible teneur en carburant mort du type à pression négative comprend en outre un déflecteur résistant aux ondes (4) ; il y a au moins un déflecteur résistant aux ondes (4) dans le dispositif ; le déflecteur résistant aux ondes (4) divise l'espace interne du dispositif de réservoir de carburant d'avion en au moins deux espaces (L, H) ; chaque deux espaces adjacents communiquent l'un avec l'autre par un orifice de communication (8) au fond du déflecteur résistant aux ondes (4) correspondant ; le dispositif de réservoir de carburant d'avion utilise la différence de pression entre les espaces adjacents (L, H) pour aspirer le carburant afin qu'il s'écoule dans un espace d'alimentation en carburant à basse pression (L) de manière à éviter les bulles dans le carburant fourni au moteur,
dans lequel une surface biseautée (1) est arrangée au fond du dispositif de réservoir de carburant d'avion comprenant tous les espaces internes (L, H) résultant de la division par le au moins un déflecteur résistant aux ondes (4) pour réduire le poids du carburant mort, la distance de la surface biseautée (1) au fond du dispositif de réservoir de carburant d'avion augmente progressivement dans la direction de l'espace d'alimentation en carburant à basse pression (L) vers l'espace à haute pression (H),
dans lequel le déflecteur résistant aux ondes (4) comprend un premier côté, un deuxième côté, un troisième côté arrangé à l'opposé du premier côté, et un quatrième côté arrangé à l'opposé du deuxième côté, dans lequel le premier côté est relié de manière étanche à la coque supérieure de la coque du réservoir de carburant ; le deuxième côté et le quatrième côté sont connectés de manière étanche aux deux côtés opposés de la coque du réservoir de carburant respectivement ; l'orifice de communication (8) est arrangé sur le troisième côté, la partie restante du troisième côté est connectée de manière étanche à la surface biseautée (1) au fond de la coque du réservoir de carburant à l'exception de la partie correspondant à l'orifice de communication (8).

2. Dispositif de réservoir de carburant d'avion anti-bulle à faible teneur en carburant mort de type à pression négative selon la revendication 1, dans lequel, chaque deux espaces adjacents (L, H) communiquent l'un avec l'autre par l'intermédiaire d'un tuyau de communication arrangé sur la coque du réservoir de carburant, et une soupape est fourni sur chaque tuyau de communication ; la soupape est configurée pour contrôler l'état de connexion du tuyau de communication, la soupape est contrôlée pour s'ouvrir lorsque du carburant est rempli dans le dispositif de réservoir de carburant d'avion, et la soupape est contrôlée pour se fermer après que le remplissage de carburant est terminé.
